Europäisches Patentamt

European Patent Office

Office européen des brevets

(19)

(11) Numéro de publication: **0 115 710**
A1

## (12) DEMANDE DE BREVET EUROPEEN

(21) Numéro de dépôt: **83400229.7**

(22) Date de dépôt: **03.02.83**

(51) Int. Cl.³: **G 01 B 17/00,** G 01 S 15/88, B 05 B 12/00

(43) Date de publication de la demande: **15.08.84**
**Bulletin 84/33**

(71) Demandeur: **PARAGERM-FRANCE S.A. Société dite:,**
**32 Avenue de l'Opéra, F-75002 Paris (FR)**

(72) Inventeur: **Moraldo, Jean-Pierre, 29 Avenue Auguste**
**Renoir, F-06800 Cagnes/Mer (FR)**

(84) Etats contractants désignés: **AT BE CH GB IT LI LU NL**
**SE**

(74) Mandataire: **Flechner, Willy et al, CABINET**
**FLECHNER 22, Avenue de Friedland, F-75008 Paris (FR)**

(54) Dispositif pour contrôler la distance entre un dispositif de pulvérisation, notamment un pistolet de pulvérisation, et un objet destiné à recevoir le produit pulvérisé, notamment un mur.

(57) Dispositif pour contrôler la distance entre un pistolet de pulvérisation et une surface destinée à recevoir le produit pulvérisé. L'émetteur et/ou le récepteur (3) d'un télémètre (6) forme une unité avec le dispositif de pulvérisation (1) et fournit un signal quand la distance optimale pour le processus de pulvérisation entre le pistolet de pulvérisation (1) et l'objet (2) n'est pas respectée. Pulvérisation de micro-brouillards sur les murs de salles d'hôpitaux.

EP 0 115 710 A1

1

0115710

38.102

Dispositif pour contrôler la distance entre un dispositif de pulvérisation, notamment un pistolet de
pulvérisation, et un objet destiné à recevoir le
produit pulvérisé, notamment un mur.

La présente invention se rapporte à un
dispositif pour contrôler la distance entre un dispositif de pulvérisation et un objet destiné à recevoir le produit pulvérisé. Le dispositif suivant
l'invention est utilisé notamment en liaison avec
des pistolets de pulvérisation, notamment des pistolets pour la pulvérisation de produits divers,
plus particulièrement, et sous la forme de micro-
brouillards, d'un produit désinfectant sur les murs
des salles hospitalières, notamment des salles d'opérations, ou encore pour la pulvérisation de la
peinture, pour des travaux de peinture d'un mur
extérieur ou d'une paroi intérieure, mais également
pour appliquer des peintures sur des objets métalliques, comme carrosseries d'automobiles ou autres
objets semblables.

L'invention repose sur le fait que l'on
obtient un dépôt optimal de brouillard de pulvérisation sous la forme d'un micro-brouillard du produit à appliquer, si le pistolet de pulvérisation
est à une distance de l'objet destiné à recevoir
le produit pulvérisé adaptée au produit à pulvériser.

BAD ORIGINAL

2

0115710

Cette distance est de par exemple 0,8 à 1,2 m lors de la pulvérisation du produit à appliquer sur des murs. Si la distance est plus petite, il se forme sur le mur destiné à recevoir le produit pulvérisé des accumulations du produit qui rendent la surface inégale, puisque le guidage du pistolet de pulvérisation ne peut plus être effectué avec la précision et la régularité nécessaires à une telle distance. Si la distance est trop grande, on court le risque que les particules de peinture se prennent en gouttes plus grandes de sorte que, dans ce cas aussi, le voile appliqué est irrégulier.

Le même problème se pose en particulier lors de la désinfection de murs (murs de chambres) quand l'agent de désinfection doit être pulvérisé à l'aide d'un dispositif de pulvérisation. Dans ce cas d'utilisation aussi, la répartition uniforme de l'agent de désinfection est mise en question quand le dispositif de pulvérisation n'est pas maintenu dans une plage de distances prescrite par rapport à la surface destinée à recevoir le produit pulvérisé. Si la pulvérisation s'effectue à une distance trop petite, on court le danger de ne pas recouvrir certaines régions. Si la distance est trop grande, les gouttelettes de l'agent de désinfection se réunissent au cours de la projection et les particules plus grandes ainsi formées ne rencontrent la surface à désinfecter que par intervalles, c'est-à-dire qu'il subsiste des espaces intermédiaires sans couche de désinfection.

L'invention se donne pour but de garantir un dépôt uniforme à l'aide d'un pistolet de pulvérisation ou d'un dispositif semblable, ce qui signifie qu'elle indique, en conséquence, pour l'objectif recherché, un dispositif de pulvérisation qui peut être maintenu à une distance définie de l'objet destiné à recevoir le produit pulvérisé, donc par exemple de la paroi à désinfecter ou à revêtir de peinture.

Pour résoudre ce problème, on aurait pu penser à relier au pistolet de pulvérisation un élément d'appui s'appuyant sur le mur pour donner à l'utilisateur la sensation de la distance réelle entre le pistolet de pulvérisation et le mur destiné à recevoir le produit pulvérisé.

Une solution de ce type aurait l'inconvénient de ne pas empêcher un contact occasionnel et donc une destruction de la couche déposée, indépendamment de formations éventuelles de régions masquées.

Pour résoudre le problème mentionné ci-dessus, on propose au contraire d'accoupler au dispositif de pulvérisation, donc par exemple au pistolet de pulvérisation, par son émetteur et/ou son récepteur, un télémètre fonctionnant par voie optique ou par voie acoustique de manière à contrôler constamment la distance réelle du dispositif de pulvérisation, la distance mesurée réellement étant affichée suivant la seconde caractéristique de ce que propose l'invention ou étant, suivant un perfectionnement avantageux, mise en oeuvre directement pour la commande du dispositif d'entraînement du dispositif de pulvérisation en sorte que celui-ci peut être mis en fonctionnement et/ou être maintenu en fonctionnement quand et seulement quand est respectée la distance optimale pour le processus de pulvérisation entre le pistolet de pulvérisation et l'objet destiné à recevoir le produit pulvérisé.

Comme télémètre, on fait appel, suivant une autre proposition de l'invention, à un télémètre fonctionnant dans la plage des ultrasons, de préférence à 40 kHz environ.

En utilisant les dispositions mentionnées ci-dessus, on est sûr que le dispositif de pulvérisation, donc notamment le pistolet de pulvérisation, est, en fonctionnement, maintenu constamment à la distance optimale de par exemple 0,8 m à 1,2 m, puisque tout rapprochement ou éloignement trop grand est affiché ou fait que le dispositif de pulvérisation est mis temporairement hors service.

Aux dessins annexés, donnés uniquement à titre d'exemple :

la figure 1 représente la structure de principe d'un dispositif suivant l'invention,

la figure 2 est un schéma de circuit assurant la coopération entre un dispositif de pulvérisation et un télémètre à ultrasons,

les figures 3a et 3b sont des schémas destinés à expliciter la mise en oeuvre du télémètre à ultrasons, et

la figure 4 est un schéma de circuit destiné à expliciter la réalisation technique des circuits du télémètre à ultrasons.

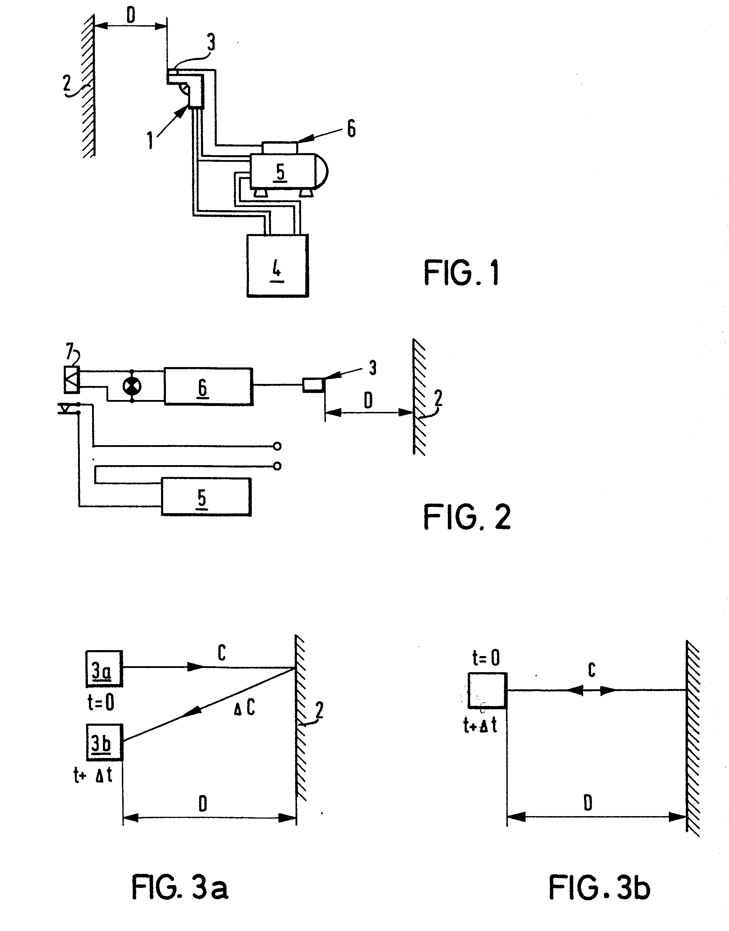

On explicitera d'abord, en regard de la figure 1, la structure de principe d'un dispositif suivant l'invention, en liaison avec un pistolet de pulvérisation destiné à déposer sur une surface un voile continu du produit à pulvériser.

Aux dessins, le pistolet de pulvérisation porte la référence 1 et doit pulvériser un micro-brouillard sur un mur 2.

Pour assurer un dépôt aussi uniforme que possible, ayant une dimension définie des particules du produit à déposer, le pistolet de pulvérisation 1 doit être maintenu à une distance définie D qui, dans un exemple donné, peut varier de préférence entre 0,8 m et 1,2 m.

Pour respecter cette distance, il est prévu sur le pistolet de pulvérisation un détecteur de mesure à ultrasons 3 qui, dans l'exemple de réalisation, est constitué d'un émetteur et d'un récepteur à ultrasons.

Le produit à pulvériser est envoyé sous pression au pistolet de pulvérisation depuis le récipient 4, tantôt directement, tantôt par l'intermédiaire du compresseur 5. Un télémètre 6 sert à surveiller constamment la distance correcte entre le pistolet de pulvérisation 1 et le mur 2 en fonction de la valeur obtenue par le détecteur 3 du télémètre.

La figure 2 représente, suivant un schéma de circuit simplifié, une possibilité de surveillance de la distance entre le pistolet de pulvérisation 1 et le mur 2, un relais 7 étant manoeuvré par le télémètre 6, en fonction des valeurs de mesure obtenues, par l'intermédiaire du détecteur 3 de manière à interrompre toujours l'alimentation en courant électrique du compresseur 5 quand la distance optimale prescrite de 0,8 m à 1,2 m n'est pas respectée. Les contacts du relais 7 coupent le circuit d'alimentation du compresseur 5 de sorte que celui-ci ne fonctionne pas en dehors de la distance prescrite et qu'ainsi on ne peut pas pulvériser le produit sur le mur 2 avec le pistolet de pulvérisation 1.

De ces brèves explications, il ressort déjà pour le spécialiste de ce domaine que l'on peut, sans activité inventive particulière, effectuer également d'une autre manière l'exploitation du résultat de mesure, en déclenchant par exemple un signal optique ou acoustique, par exemple par l'utilisation d'un relais semblable au relais 7 suivant la figure 2, de sorte que l'opérateur peut reconnaître immédiatement que la distance correcte, par rapport au mur destiné

6

0115710

à recevoir le produit pulvérisé, n'est plus respectée.

Il est clair, en outre, à partir des explications ci-dessus, que pour le spécialiste de ce domaine le fonctionnement du compresseur ne doit pas être nécessairement interrompu, mais que l'on peut également mettre en oeuvre, avec le même succès, toute autre interruption de l'arrivée du produit à pulvériser, notamment par un verrouillage dans le pistolet de pulvérisation même.

Dans l'exemple de réalisation reproduit seulement dans son principe à la figure 1, on suppose que tant l'émetteur que le récepteur du télémètre à ultrasons sont fixés sur le pistolet de pulvérisation même. En pratique, on peut, bien entendu, fixer l'un de l'émetteur et du récepteur à poste fixe à une distance définie du mur destiné à recevoir le produit pulvérisé, tandis que l'autre est prévu sur le pistolet de pulvérisation, de sorte que la distance réelle peut être déterminée par l'addition du trajet de propagation de l'émetteur jusqu'au mur et jusqu'au pistolet de pulvérisation.

Ceci sera explicité brièvement en regard des figures 3a et 3b. La figure 3a montre que l'émetteur 3a et le récepteur 3b ne doivent pas nécessairement être réunis, mais que la distance de l'un d'entre eux au mur 2 peut également être déterminée quand l'autre est à une distance constante du mur.

En supposant que le détecteur 3a soit à une distance constante c et que le récepteur 3b soit sur le pistolet de projection à une distance variable $\Delta c$, on peut calculer, en mesurant le retard du son qui est proportionnel au trajet c + $\Delta c$, directement le trajet $\Delta c$ dans un microprocesseur, $\Delta c$ devant être égal à la distance D entre le pistolet de pulvérisation et le mur 2.

BAD ORIGINAL

La figure 3b montre, en revanche, qu'il est recommandé en pratique, simplement pour des raisons de la technique des circuits, de réunir l'émetteur et le récepteur en une unité, parce qu'ainsi on peut effectuer également, d'une manière particulièrement simple, la synchronisation entre les deux éléments.

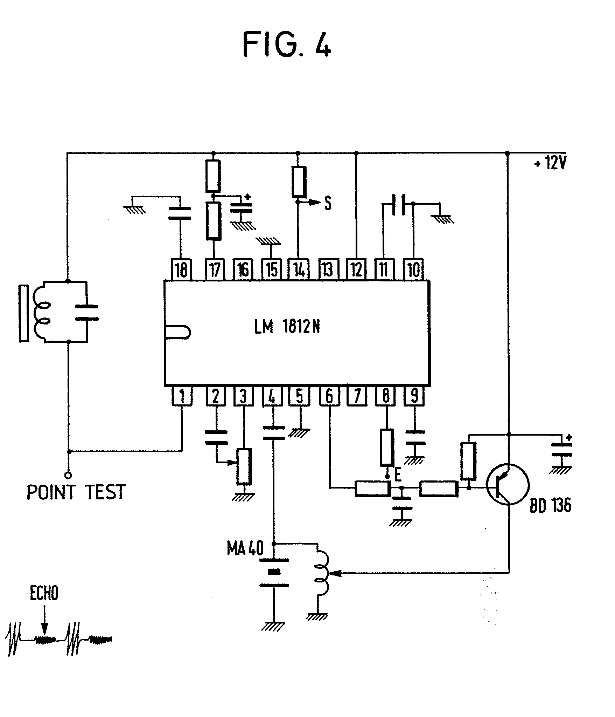

La figure 4 représente finalement un mode de réalisation du circuit, en supposant que l'on utilise comme microprocesseur pour le télémètre à ultrasons un composant LM 18 12 N monté d'une manière correspondante et qui coopère avec un circuit oscillant accordé sur 40 kHz constitué d'un bobinage à 5 mH et d'une capacité de 3,3 nF. Les impulsions de haute fréquence ainsi produites, ayant de préférence une durée de 1 ms, sont envoyées par l'intermédiaire d'un émetteur. Le récepteur reçoit l'écho de cette fréquence envoyée après un intervalle de temps donné par la distance entre le pistolet de pulvérisation et le mur destiné à recevoir le produit pulvérisé, et cet intervalle de temps est exploité dans la puce à la manière connue. La distance entre les impulsions émises est choisie de manière à ce que le domaine intéressant l'écho soit reçu de manière impeccable entre deux impulsions, comme cela est indiqué en bas, à gauche, à la figure 4. Pour le contrôle du temps, on se sert du circuit oscillant commandé par quartz MA 40, qui est excité par le transistor BD 136.

L'invention est explicitée sur un exemple de réalisation concret. On notera à cet égard que la réalisation des circuits peut s'effectuer également d'une autre manière, notamment suivant une technique de circuit ayant des composants distincts. Ce qui est déterminant est que le dispositif de pulvérisation, donc par exemple un pistolet de pulvérisation, soit accouplé avec au moins une partie d'un télémètre de manière à ce que sa position dans l'espace, et notamment par rapport à l'objet destiné à recevoir le produit pulvérisé, puisse être et soit contrôlée toujours. Au lieu d'un télémètre fonctionnant dans le domaine des ultrasons, on peut prévoir également un télémètre fonctionnant par voie optique.

1

Revendications de brevet

1. Dispositif pour contrôler la distance entre un dispositif de pulvérisation et un objet destiné à recevoir le produit pulvérisé, notamment pour surveiller la distance entre un pistolet de pulvérisation (d'un produit de désinfection) et une surface (mur) destinée à recevoir le produit pulvérisé, caractérisé par l'utilisation d'un télémètre (6) fonctionnant par voie optique ou acoustique, dont l'émetteur et/ou le récepteur (3) forme par construction une unité avec le dispositif de pulvérisation (1) et fournit un signal quand la distance optimale pour le processus de pulvérisation entre le pistolet de pulvérisation et l'objet n'est pas respectée.

2. Dispositif suivant la revendication 1, caractérisé en ce qu'il est prévu comme télémètre un télémètre à ultrasons.

3. Dispositif suivant la revendication 1 ou 2, caractérisé en ce qu'au télémètre (6) est relié un dispositif avertisseur par voie acoustique pour fournir un signal acoustique quand la distance optimale pour le processus de pulvérisation entre le pistolet de pulvérisation et l'objet n'est pas respectée.

4. Dispositif suivant l'une des revendications 1 à 3, caractérisé en ce que le télémètre (6) coopère avec un organe de commutation (7) qui attaque directement le circuit d'alimentation en courant électrique du dispositif de commande (5) du dispositif de pulvérisation de manière à pouvoir mettre et/ou maintenir celui-ci en fonctionnement quand et seulement quand est respectée la distance optimale pour le processus de pulvérisation entre le pistolet de pulvérisation et l'objet.

5. Dispositif suivant l'une des revendications 1 à 4, caractérisé en ce que les émetteur et récepteur (3) du télémètre (6) (à ultrasons) sont montés sur le dispositif de pulvérisation (pistolet de pulvérisation) (1).

6. Dispositif suivant l'une des revendications 1 à 5, caractérisé en ce que la plage autorisée pour le dispositif de pulvérisation est réglée entre 0,8 et 1,2 m.

7. Dispositif suivant l'une des revendications 2 à 6, caractérisé en ce que le télémètre à ultrasons fonctionne à une fréquence de 40 kHz et émet des impulsions de mesure d'une durée d' une milliseconde environ.

8. Dispositif suivant la revendication 7, caractérisé en ce que l'émetteur du télémètre à ultrasons est mis à la terre dans les intervalles de temps compris entre les impulsions.

9. Dispositif suivant la revendication 1 ou 2, caractérisé en ce que le télémètre (6) agit sur un voyant lumineux qui signale que la distance optimale pour le processus de pulvérisation entre le pistolet de pulvérisation et l'objet n'est pas respectée.

10. Dispositif suivant la revendication 9, caractérisé en ce qu'au télémètre (6) est relié un dispositif d'éclairage éclairant la surface destinée à recevoir le produit pulvérisé de manière à ce que cette surface soit éclairée quand et seulement quand
le dispositif de pulvérisation est maintenu à distance
correcte de la surface destinée à recevoir le produit
pulvérisé.

0115710

FIG.1

FIG.2

FIG.3a

FIG.3b

# FIG. 4

+12V

LM 1812N

S

18 17 16 15 14 13 12 11 10

1 2 3 4 5 6 7 8 9

POINT TEST

MA 40

BD 136

E

ECHO

**Office européen des brevets**

**RAPPORT DE RECHERCHE EUROPEENNE**

**0115710**
Numéro de la demande

EP  83 40 0229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | GB-A-2 025 665 (E. ALLMAN & COMPANY, LTD.) * Titre; figures 1-4,5A,5B; page 2, ligne 47 - page 3, ligne 32; page 3, lignes 67-82 * | 1,2,5-7 | G 01 B 17/00 G 01 S 15/88 B 05 B 12/00 |
| | --- | | |
| Y | DE-A-2 755 585 (KLÖCKNER-HUMBOLDT-DEUTZ A.G.) * Titre; figures 1-3; page 15, paragraphe 2 - page 19, paragraphe 2 * | 1 | |
| | --- | | |
| Y,X | DE-A-2 855 217 (LICENTIA PATENT-VERWALTUNGS-GmbH) * Titre; figures 1-3; page 8, paragraphe 2 - page 11, paragraphe 1; page 11, paragraphe 3 - page 13, paragraphe 1; page 13, paragraphe 3 - page 16, paragraphe 4 * | 1-5,9 | |
| | --- | | |
| A | GB-A-1 573 117 (UNIVERSITY COLLEGE CARDIFF) * Figures 1-3; en entier * | 1,2 | B 05 B 12/00 G 01 B 17/00 G 01 S 15/00 |
| | ----- | | |

**DOMAINES TECHNIQUES RECHERCHES (Int. Cl. 3)**

Le présent rapport de recherche a été établi pour toutes les revendications

| Lieu de la recherche | Date d'achèvement de la recherche | Examinateur |
|---|---|---|
| LA HAYE | 03-10-1983 | VISSER F.P.C. |